# EUROPEAN PATENT SPECIFICATION

(11) **EP 3 889 337 B1**
(45) Date of publication and mention of the grant of the patent: **22.05.2024**
(21) Application number: 21165833.1
(22) Date of filing: 30.03.2021
(51) Int. Cl.: D06F 34/10, D06F 58/40, D06F 25/00, D06F 29/00, D06F 103/32, D06F 105/28, D06F 105/50

(54) **CONTROL METHOD FOR A LAUNDRY TREATMENT APPARATUS**
STEUERVERFAHREN FÜR EINE WÄSCHEBEHANDLUNGSVORRICHTUNG
PROCÉDÉ DE COMMANDE POUR UN APPAREIL DE TRAITEMENT DU LINGE

(30) Priority: 31.03.2020 KR 20200039376; 21.09.2020 KR 20200121659
(43) Date of publication of application: 06.10.2021
(73) Proprietor: LG Electronics Inc., Seoul 07336 (KR)
(72) Inventor: CHOI, Hongki, Seoul 08592 (KR); HWANG, Jeongwon, Seoul 08592 (KR)
(74) Representative: Vossius & Partner Patentanwälte Rechtsanwälte mbB

(56) References cited:
- EP-A1- 1 433 894
- EP-A1- 1 548 174
- DE-A1-102018 100 442
- US-A1- 2020 024 784

## Description

### BACKGROUND OF THE INVENTION

### Field of the Invention

The present invention relates to a control method for a laundry treating apparatus.

### Discussion of the Related Art

A laundry treating apparatus collectively refers to a laundry washing apparatus, a laundry drying apparatus, and a laundry washing and drying apparatus.

A laundry treating apparatus of the related art is provided to include a dryer for drying laundry, a washing machine for washing laundry, and a rack for providing a space where any one of the dryer and the washing machine may be located on the other one. The laundry treating apparatus in which the dryer and the washing machine are stacked on the rack up and down has an advantage in that a user may easily move washed laundry from the washing machine to the dryer.

However, in the aforementioned laundry treating apparatus of the related art, since a controller provided in the dryer and a controller provided in the washing machine operate by their respective circuits independent from each other, a problem occurs in that one apparatus fails to control another apparatus. Therefore, when the operation of any one of the washing machine and the dryer is completed, a problem occurs in that a user should directly perform a process of supplying a power to the other one and a process of inputting a control command.

DE 10 2018 100442 A1 discloses a method and apparatus for operating a washer-dryer. US 2020/024784 A1 generally relates to systems and methods for controlling one appliance using the controls of another appliance communicatively coupled thereto.

### SUMMARY OF THE INVENTION

Accordingly, the present invention is directed to a control method for a laundry treating apparatus, which substantially obviate one or more problems due to limitations and disadvantages of the related art. The invention is defined in the independent claim. Dependent claims describe preferred embodiments.

An object of the present invention is to provide a control method for a laundry treating apparatus and, in which consumption of a standby power may be minimized.

Another object of the present invention is to provide a control method for a laundry treating apparatus, in which one of two treating apparatuses capable of washing and drying laundry may control the other one.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the invention, as embodied and broadly described herein, the present disclosure provides a control method for a laundry treating apparatus comprising a washing machine provided with a tub in which water is stored and a washing drum provided inside the tub, storing laundry therein, and a dryer provided with a drying drum in which laundry is stored and a supply unit for removing water from laundry by supplying the air to the drying drum.

The control method for the laundry treating apparatus comprises a washing machine power supply step of supplying a power to a washing machine interface provided to receive a control command; a course execution step of executing a washing course by the washing machine if the washing course is input to the washing machine interface; a dryer power supply step of supplying the power to the dryer if a preheating request signal is input through the washing machine interface; and a preheating step of including a supply stroke of supplying the air to the drying drum and a heating stroke of heating the air supplied to the drying drum.

The control method for the laundry treating apparatus may further comprise activating a dryer display if the preheating request signal is received.

The dryer power supply step may include a step of activating the dryer display and a step of supplying the power to the supply unit.

The control method for the laundry treating apparatus may further comprise a communication step of transmitting the preheating request signal to the dryer by the washing machine if the preheating request signal is input through the washing machine interface.

The dryer power supply step may be initiated when a remaining time until the course execution time ends is a preset reference time or less.

The course execution step may sequentially execute a water supply stroke of supplying water to the tub, a particle removal stroke of rotating the washing drum, a drainage stroke of discharging water of the tub to the outside of the tub, and a dehydrating stroke of removing water from laundry by rotating the washing drum, and the reference time may be set to a remaining time or less from an ending timing of the drainage stroke to an ending timing of the dehydrating stroke.

The course execution step may sequentially execute a water supply stroke of supplying water to the tub, a particle removal stroke of rotating the washing drum, a drainage stroke of discharging water of the tub to the outside of the tub, and a dehydrating stroke of removing water from laundry by rotating the washing drum, and the reference time may be set to a remaining time or less from an initiation timing of the dehydrating stroke to an ending timing of the dehydrating stroke.

The control method for the laundry treating apparatus may further comprise a measuring step of measuring a temperature of the air discharged from the drying drum in the middle of the preheating step, wherein the preheating step may stop the heating stroke if the temperature measured at the measuring step is higher than a preset reference temperature.

The preheating step may resume the heating stroke when the temperature measured at the measuring step is the reference temperature or less.

The preheating step may end when the washing machine notifies the dryer of ending of the dehydrating stroke.

The heating stroke may operate only some of a plurality of heaters provided in the supply unit, heating the air.

The supply unit may include a duct for re-supplying the air discharged from the drying drum to the drying drum, a refrigerant path for forming a path through which a refrigerant circulates, a compressor for circulating the refrigerant along the refrigerant path, a heat absorption unit for transferring heat owned by the air entering the duct from the drying drum to the refrigerant, and a heat emission unit for transferring heat owned by the refrigerant to the air that has passed through the heat absorption unit, and may control the compressor to increase flow velocity of the refrigerant when the temperature of the air discharged from the drying drum, which is measured in the middle of the preheating step, is less than a preset first reference temperature.

The supply unit may control the compressor to maintain flow velocity of the refrigerant when the temperature of the air discharged from the drying drum, which is measured in the middle of the preheating step, is higher than the first reference temperature and lower than a second reference temperature set to be higher than the first reference temperature.

The supply unit may control the compressor to reduce flow velocity of the refrigerant when the temperature of the air discharged from the drying drum, which is measured in the middle of the preheating step, is higher than the second reference temperature.

In another aspect of the present disclosure, the present disclosure provides a control method for a laundry treating apparatus, the control method comprising a washing standby mode step of supplying a power to a washing machine second controller controlling a washing machine interface without supplying the power to a washing machine driving unit, a washing machine first controller controlling the washing machine driving unit, and the washing machine interface; a drying standby mode step of supplying the power to a dryer second controller controlling the dryer interface without supplying the power to a dryer driving unit, a dryer first controller controlling the dryer driving unit and a dryer interface; a washing machine power supply step of supplying the power to the washing machine driving unit, the washing machine first controller and the washing machine interface; a course execution step of executing a washing course by controlling the washing machine driving unit if the washing course is input through the washing machine interface; a communication step of transmitting a preheating request signal from the washing machine second controller to the dryer second controller if the preheating request signal is input through the washing machine interface; a dryer power supply step of supplying the power to the dryer driving unit if the dryer second controller receives the preheating request signal; and a preheating step including a supply stroke of supplying the air to a drying drum by controlling the dryer driving unit and a heating stroke of heating the air supplied to the drying drum.

The dryer power supply step may be initiated when a remaining time until the course execution time ends is a preset reference time or less.

The course execution step may sequentially execute a water supply stroke of supplying water to a tub, a particle removal stroke of rotating a washing drum provided inside the tub to store laundry therein, a drainage stroke of discharging water of the tub, and a dehydrating stroke of removing water from laundry by rotating the washing drum, and the reference time may be set to a timing point between an ending timing of the drainage stroke to an ending timing of the dehydrating stroke.

The course execution step may sequentially execute a water supply stroke of supplying water to a tub, a particle removal stroke of rotating a washing drum provided inside the tub to store laundry therein, a drainage stroke of discharging water of the tub, and a dehydrating stroke of removing water from laundry by rotating the washing drum, and the reference time may be set to a timing point between an initiation timing of the dehydrating stroke to an ending timing of the dehydrating stroke.

The reference time may be set to a remaining timing or less from the ending timing of the drainage stroke to the ending timing of the dehydrating stroke.

The control method may further comprise a measuring step of measuring a temperature of the air discharged from the drying drum in the middle of the preheating step, wherein the preheating step may stop the heating stroke if the temperature measured at the measuring step is higher than a preset reference temperature.

The preheating step may resume the heating stroke when the temperature measured at the measuring step is the reference temperature or less.

The preheating step may end when the washing machine second controller notifies the dryer second controller of ending of the dehydrating stroke.

The heating stroke may operate only some of a plurality of heaters provided to heat the air supplied to the drying drum.

The heating stroke may be executed through a heat absorption unit for dehumidifying the air discharged from the drying drum, a heat emission unit for heating the air that has passed through the heat absorption unit, and a refrigerant path and a compressor for circulating a refrigerant between the heat absorption unit and the heat emission unit.

The control method may further comprise a measuring step of measuring a temperature of the air discharged from the drying drum in the middle of the preheating step, and the dryer first controller may control the compressor to increase flow velocity of the refrigerant when the temperature measured at the measuring step is less than a preset first reference temperature.

The dryer first controller may control the compressor to maintain flow velocity of the refrigerant when the temperature measured at the measuring step is higher than the first reference temperature and lower than a second reference temperature set to be higher than the first reference temperature.

The dryer first controller may control the compressor to reduce flow velocity of the refrigerant when the temperature is measured at the measuring step is higher than the second reference temperature.

In other aspect of the present disclosure, the present disclosure provides a control method for a laundry treating apparatus, the control method comprising a standby mode step of supplying a power to a second controller controlling a dryer interface and a washing machine interface without supplying the power to a washing machine driving unit, the washing machine interface, a dryer driving unit, the dryer interface, and a first controller controlling the washing machine driving unit and the dryer driving unit; a washing machine power supply step of supplying the power to the washing machine interface; a course execution step of executing a washing course by controlling the washing machine driving unit if the washing course is input through the washing machine interface; a dryer power supply step of supplying the power to the dryer driving unit if a preheating request signal is input through the washing machine interface; and a preheating step of including a supply stroke of supplying the air to a drying drum through the dryer driving unit and a heating stroke of heating the air supplied to the drying drum.

The dryer power supply step may be initiated when a remaining time until the course execution time ends is a preset reference time or less.

According to the present disclosure, a laundry treating apparatus and a control method for the same may be provided, in which consumption of a standby power may be minimized.

Also, according to the present disclosure, a laundry treating apparatus and a control method for the same may be provided, in which one of two treating apparatuses capable of washing and drying laundry may control the other one.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrate an example of a laundry treating apparatus;
FIGS. 2 and 3 illustrates another embodiment of a laundry treating apparatus;
FIG. 4 illustrates an example of a control panel, a washing machine driving unit, a dryer driving unit, a washing machine interface and a dryer interface, which are provided in a laundry treating apparatus;
FIG. 5 illustrates an example of a control method for a laundry treating apparatus; and
FIG. 6 illustrates another embodiment of a control method for a laundry treating apparatus.

### DETAILED DESCRIPTION OF THE INVENTION

Reference will now be made in detail to the preferred embodiments of the present disclosure, examples of which are illustrated in the accompanying drawings. Meanwhile, elements or control method of apparatuses which will be described below are only intended to describe the embodiments of the present disclosure and are not intended to restrict the scope of the present disclosure. Wherever possible, the same reference numbers will be used throughout the drawings to refer to the same or like parts.

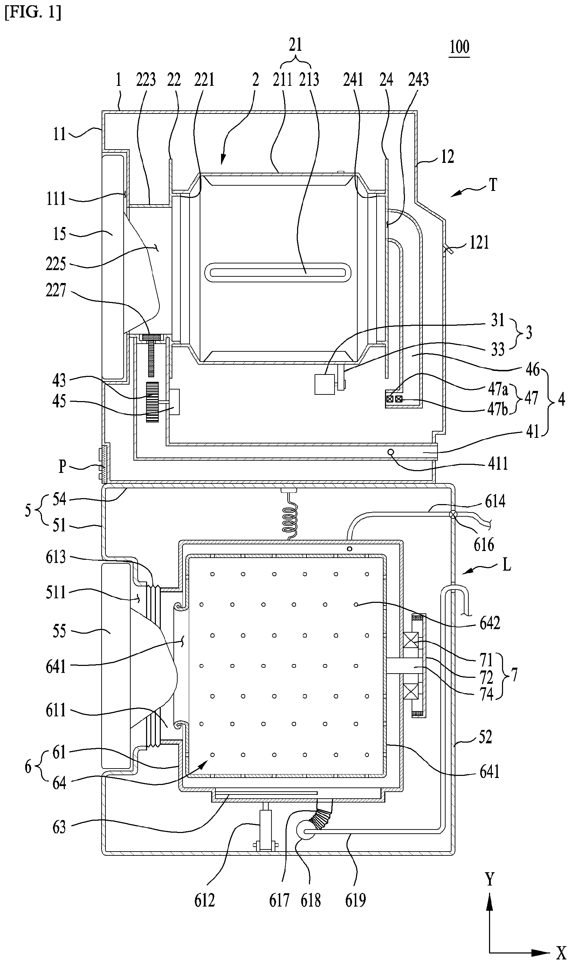

As shown in FIG. 1, a laundry treating apparatus 100 may be provided to include a dryer (first treating apparatus T) for drying laundry, and a washing machine (second treating apparatus L) provided to support a bottom surface of the dryer and therefore wash or dry laundry. Unlike the case shown in FIG. 1, the laundry treating apparatus 100 may be provided such that the dryer T may support a bottom surface of the washing machine L.

The dryer T includes a first cabinet 1, a drying drum 2 rotatably provided in the first cabinet 1, providing a space in which laundry is stored, and a supply unit 4 supplying the heated air into the drying drum 2.

The first cabinet 1 may be provided to include a front panel 11 (first front panel) forming a front surface of the dryer, a rear panel 12 (first rear panel) forming a rear surface of the dryer, an upper panel forming an upper surface of the dryer, and a base panel mounted on an upper surface of the washing machine L.

The first front panel 11 is provided with a first inlet 111 provided to be communicated with the drying drum 2, and the first inlet 111 may be provided to be opened or closed by a door 15 (first door) rotatably coupled to the first cabinet.

The drying drum 2 may be provided as a drum body 21 of a cylindrical shape of which front surface and rear surface are respectively opened. In this case, a front support 22 rotatably supporting the front surface of the drum body 211 and a rear support 24 rotatably supporting the rear surface of the drum body 211 may be provided inside the first cabinet 1.

The front support 22 may be provided to include a first fixed body fixed into the first cabinet 1, a drying drum inlet 225 provided to pass through the first fixed body, communicating the first inlet 111 with the inside of the drum body 21, and a first support body 221 provided in the first fixed body and inserted into the front surface of the drum body 21.

The first fixed body may be provided even in any shape if it may be provided with the drying drum inlet 225 and the first support body 221. The first support body 221 may be provided in a pipe shape protruded from the first fixed body toward the drum body 21.

The front support 22 may be provided to be connected to the first inlet 111 through a connecting body 223. The connecting body 223 may be provided in a cylindrical shape to surround the first inlet 111. In this case, the drying drum inlet 225 may be provided as a through hole connected to the first inlet 111 by passing through the connecting body 223.

A discharge outlet communicated with the supply unit 4 may be provided in the connecting body 223. The discharge outlet may be provided as a hole provided to pass through the connecting body 223, and a filter 227 may detachably be inserted into the discharge outlet. The air inside the drum body 21 may move to the supply unit 4 through the discharge outlet and the filter 227, and particles contained in the air in this process may be filtered by the filter 227.

The rear support 24 may be provided to include a second fixed body fixed into the first cabinet 1, and a second support body 241 provided in the second fixed body and inserted into the rear surface of the drum body 21. The rear support 24 is provided with a supply hole 243 provided to pass through the second fixed body, guiding the air supplied from the supply unit 4 to the drum body 21.

A lifter 213 for stirring of laundry may be provided on a circumferential surface of the drum body 21. The lifter 213 may be provided as a board protruded from the circumferential surface of the drum body 211 toward a rotation center of the drum body.

The drum body 21 is rotated by a drying drum driving unit 3, and the drying drum driving unit 3 may be provided to include a drying drum motor 31 fixed into the first cabinet 1, a pulley rotated by the drying drum motor, and a belt 33 connecting a circumferential surface of the pulley with the circumferential surface of the drum body 21.

The supply unit 4 may be provided to include ducts 41 and 46 and a heat exchanger 47 provided in the ducts to exchange heat with the air. The ducts may be provided to include a discharge duct 41 guiding the air discharged from the drying drum 2 to the outside of the first cabinet 1 through the discharge outlet, and a supply duct 46 supplying the air to the inside of the drying drum 2 through the supply hole 243.

The discharge duct 41 may be provided with fans 43 and 45, and the supply duct 46 may be provided with the heat exchanger 47. The heat exchanger 47 may be provided as a heater for heating the air entering the supply duct 46. FIG. 1 illustrates that the heater is provided with a first heater 47a and a second heater 47b, which may be controlled independently, as an example. The fans may be provided to include an impeller 43 rotatably provided inside the discharge duct 41, and a fan motor 45 rotating the impeller if a power is supplied thereto. The discharge duct 41 may be provided with a temperature sensor 411 for measuring a temperature of the air discharged from the drying drum 2.

The supply duct 46 may be provided as a path of which one end is connected to the supply hole 243 and free end is arranged inside or outside the first cabinet 1. If the free end of the supply duct 46 is arranged inside the first cabinet 1, a through hole 121 may be provided in the first rear panel 12.

The washing machine L may be provided to include a second cabinet 5 provided to support a bottom surface of the first cabinet 1, and a second accommodating unit 6 provided inside the second cabinet, providing a space in which laundry is stored.

The second cabinet 5 may be provided to include a front panel 51 (second front panel) forming a front surface of the washing machine L, a rear panel 52 (second rear panel) forming a rear surface of the washing machine, and an upper panel 54 (second upper panel) forming an upper surface of the washing machine, providing a space on which the bottom surface of the first cabinet 1 is supported.

The second front panel 51 is provided with an inlet 511 (second inlet), and the second inlet 511 may be provided to be opened or closed by a door 55 (second door). The second accommodating unit 6 may be provided to include a tub 61 provided inside the second cabinet 5, providing a space in which water is stored, and a washing drum 64 rotatably provided inside the tub, storing laundry therein.

The tub 61 may be fixed to the second cabinet 5 through a tub support 612. A tub inlet 611 communicated to the second inlet 511 is provided on a front surface of the tub 61, and may be connected to the second inlet 511 through a gasket 613.

The tub 61 is supplied with water through a water supply unit, and water stored in the tub 61 is discharged to the outside of the second cabinet 5 through a drainage unit.

The water supply unit may be provided to include a water supply pipe 614 connecting a water supply source with the tub 61, and a water supply valve 616 controlling switching of the water supply pipe. The drainage unit may be provided to include a first drainage pipe 617 guiding water inside the tub 61 to the drainage pump 618, and a second drainage pipe 619 guiding water discharged from the drainage pump 618 to the outside of the second cabinet 5. The tub 61 may be provided with a heating unit 63 for heating the water supplied through the water supply source.

The washing drum 64 may be provided in a hollow cylindrical shape. A washing drum inlet 641 communicated with the second inlet 511 through the tub inlet 611 may be provided on the front surface of the washing drum, and a drum through hole 642 communicating the inside of the washing drum with the inside of the tub may be provided on the circumferential surface and the rear surface of the washing drum.

The washing drum 64 may be rotated by a washing drum driving unit 7 (washing drum motor). The washing drum driving unit 7 may be provided to include a stator 71 fixed to the rear surface of the tub 61, forming a rotating magnetic field, a rotor 72 rotated by the rotating magnetic field, and a rotary shaft 74 connecting the rotor 72 with the rear surface of the washing drum 64 by passing through the rear surface of the tub.

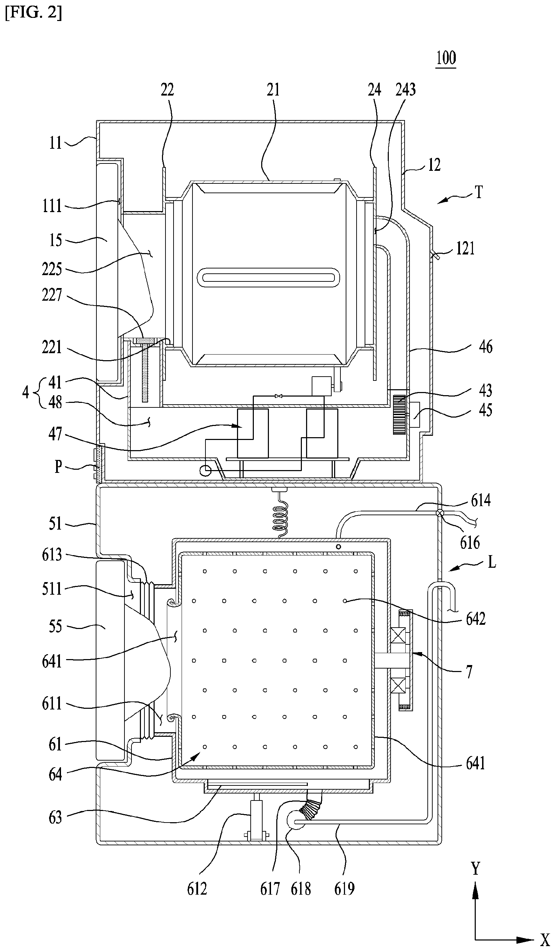

FIG. 2 illustrates another embodiment of the laundry treating apparatus 100, and the laundry treating apparatus according to this embodiment is also provided to include a dryer T and a washing machine L. The laundry treating apparatus provided in this embodiment may be provided in the same structure as that of the laundry treating apparatus shown in FIG. 1 except the structure of the supply unit 4 provided in the dryer.

The supply unit 4 according to this embodiment may be provided to include ducts 41, 46 and 48 forming a path for re-supplying the air discharged from the drum body 21 to the drum body 21, and a heat exchanger 47 dehumidifying and heating the air entering the ducts.

The ducts may be provided to include a discharge duct 41 connected to the discharge outlet, a supply duct 46 connected to the supply hole 243, and a connection duct 48 connecting the discharge duct with the supply duct. In this case, the impeller 43 of the fan may be provided inside the connection duct 48.

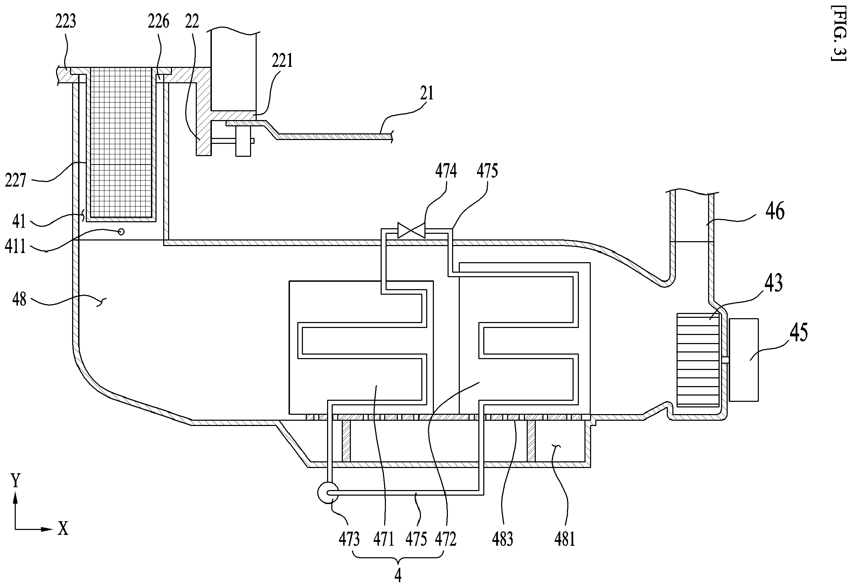

As shown in FIG. 3, the heat exchanger 47 includes a first heat exchanger 471 (heat absorption unit) removing water from the air entering the connection duct 48, and a second heat exchanger 472 (heat emission unit) provided inside the connection duct 48, heating the air passing through the first heat exchanger 471. The heat absorption unit 471 and the heat emission unit 472 are sequentially disposed along a moving direction of the air and connected with each other through a refrigerant pipe 475 that forms a circulating path of a refrigerant.

The refrigerant moves along the refrigerant pipe 475 by means of a compressor 473 arranged outside the ducts 41, 46 and 48, and the refrigerant pipe 475 is provided with a pressure controller 474 for controlling a pressure of the refrigerant that has passed through the heat emission unit 472.

The heat absorption unit 471 is a means for cooling the air and evaporating the refrigerant by delivering heat of the air entering the discharge duct 41 to the refrigerant. The heat emission unit 472 is a means for heating the air and condensing the refrigerant by delivering heat owned by the refrigerant that has passed through the compressor 473 to the air. In this case, water contained in the air will be collected in the bottom surface of the connection duct 48 along the surface of the heat absorption unit 471 when passing through the heat absorption unit 471.

In order to collect water removed from the air passing through the heat absorption unit 471, the dryer T is provided with a water collecting body 481. The water collecting body 481 may be provided anywhere in the laundry treating apparatus, which can store water discharged from the heat absorption unit, and FIG. 3 illustrates that the water collecting body 481 is provided to be communicated with the bottom surface of the connection duct 48, as an example.

A heat exchanger support 483 may further be provided in the water collecting body 481 such that the heat absorption unit 471 and the heat emission unit 472 are not in contact with the water (condensed water) stored in the water collecting body 481.

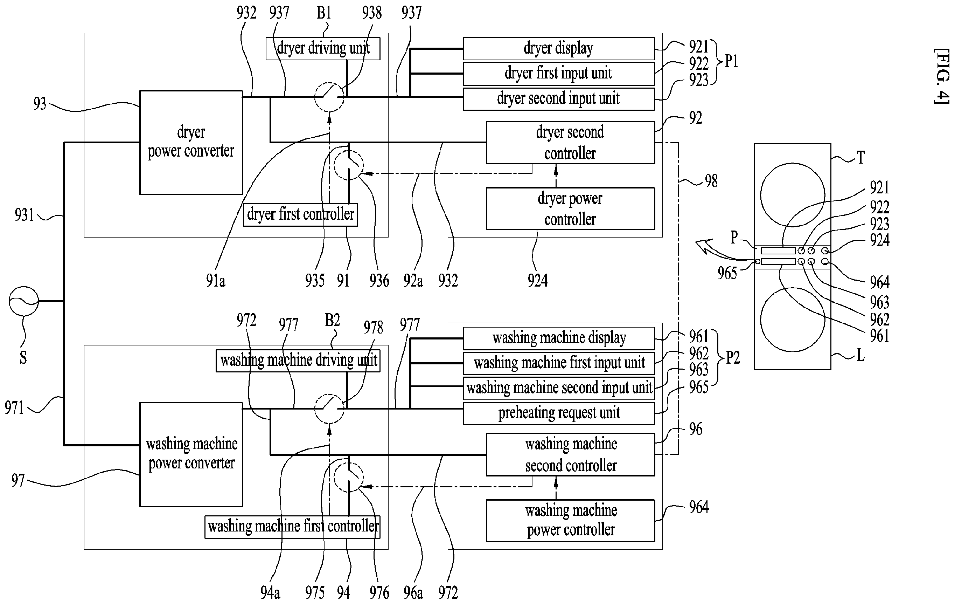

The aforementioned laundry treating apparatus 100 should be provided with an input unit and a display unit, which are required for control of each of the apparatuses T and L. That is, as shown in FIG. 4, the dryer T is provided with a dryer interface P1, and the washing machine is provided with a washing machine interface P2.

The dryer interface P1 may be provided to include a dryer display 921 and dryer input units 922 and 923, and the washing machine interface P2 may be provided to include a washing machine display 961 and washing machine input units 962 and 963.

The dryer display 921 is a means for displaying a control command capable of being input to the dryer T or a control command input to the dryer T, and the dryer input units 922 and 923 are means for inputting the control command to the dryer T. Likewise, the washing machine display 961 is a means for displaying a control command capable of being input to the washing machine L or a control command input to the washing machine L, and the washing machine input units 962 and 963 are means for inputting the control command to the washing machine L.

In order to form unity in design of the laundry treating apparatus 100 in which two treating apparatuses are arranged up and down, the dryer display 921, the dryer input units 922 and 923, the washing machine display 961 and the washing machine input units 962 and 963 may be provided in one control panel P.

The control panel P may be provided such that an upper surface is fixed to the front surface (the first front panel) of the dryer and a lower surface is fixed to the front surface (the second front panel) of the washing machine. In this case, the control panel P will serve as a fastening unit for fixing the dryer T to the washing machine L (serve to fasten the first front panel with the second front panel).

Unlike the aforementioned description, the control panel P may be provided to be fixed to any one of the first front panel 11 and the second front panel 51. FIGS. 1 and 2 show that the control panel P is fixed to a lower end of the first front panel 11, as an example. That is, a panel accommodating groove formed as the surface of the first front panel is bent to be concave is provided on the lower end of the first front panel 11, and the control panel P may be fixed to the panel accommodating groove. In this case, the control panel P will form the front surface of the dryer together with the first front panel 11.

The dryer display 921 and the dryer input units 922 and 923 are controlled by a second controller 92 provided in the dryer, and the washing machine display 961 and the washing machine input units 962 and 963 are controlled by a second display controller 96 provided in the washing machine. The case that the second controller controls the display and the input units means that the second controller and each apparatus are provided to transmit and receive a control command (or control signal) to and from each other. The second controller 92 of the dryer and the second controller 96 of the washing machine may be provided to be communicated with each other through a communication circuit 98.

The dryer input unit may be provided to include a dryer first input unit 922 and a dryer second input unit 923. The dryer first input unit 922 may be provided as a means for selecting any one of control commands (drying courses) that can be executed by the dryer, and the dryer second input unit 923 may be provided as a means for executing the selected control command or inputting a control command requesting a temporary stop of the control command which is being executed.

The washing machine input unit may be provided to include a washing machine first input unit 962 and a washing machine second input unit 963. The washing machine first input unit 962 may be provided as a means for selecting any one of control commands (washing courses) that can be executed by the washing machine, and the washing machine second input unit 963 may be provided as a means for executing the selected control command or inputting a control command requesting a temporary stop of the control command which is being executed.

The control panel P may further be provided with a preheating request unit 965. The preheating request unit 965 is a means for inputting a control command for operating the heat exchanger 47 provided in the dryer T in a state that laundry is not inserted into the drying drum 2. The preheating request unit 965 may be provided in the dryer interface P1 or the washing machine interface P2, and FIG. 4 illustrates that the preheating request unit 965 is provided in the washing machine interface P2, as an example.

Load of the dryer is classified into driving load and interface load, wherein the driving load (dryer driving load) is a dryer driving unit B1 comprised of the drying drum motor 31, the fan motor 45, the heat exchanger 47, and the temperature sensor 411, and the interface load (dryer interface load) is a dryer interface P1 comprised of the dryer display 921 and the dryer input units 922 and 923.

A power of the dryer load B1 and P1 may be provided to be controlled by a dryer first controller 91. However, the operation of the dryer driving unit B1 may be controlled by the dryer first controller 91 and the operation of the dryer interface P1 may be controlled by the dryer second controller 92.

The dryer T is connected to a power source S through a first power line 931, and may be provided such that an alternating current power supplied to the first power line 931 is converted to a direct current power through a first converter 93 (dryer power converter). In this case, the dryer second controller 92 may be provided to be supplied with a power through a dryer first power circuit 932 connected to the first converter 93, the dryer first controller 91 may be provided to be supplied with a power through a dryer second power circuit 935, and the dryer driving unit B1 and the dryer interface P1 may be provided to be supplied with a power through a dryer third power circuit 937.

The dryer second power circuit 935 may be provided with a dryer first switch 936, and the dryer third power circuit 937 may be provided with a dryer second switch 938. The dryer first switch 936 may be provided to open or close the dryer second power circuit 935 in accordance with a control command of the dryer second controller 92 or a control command of the dryer power controller 924. The dryer power controller 924 may be provided in the control panel P and provided as a means for controlling power supply to the dryer driving unit B 1 and the dryer interface P1.

If the dryer power controller 924 transmits a control command requesting power supply to the dryer second controller 92 (if a user inputs a power supply request signal through the dryer power controller), the dryer second controller 92 controls the dryer first switch 936 to close the dryer second power circuit 935 through the dryer first switch control circuit 92a. If the dryer first switch 936 closes the dryer second power circuit 935, the dryer first controller 936 may be supplied with a power.

Meanwhile, the dryer second switch 938 may be provided to open or close the dryer third power circuit 937 in accordance with the control command transmitted from the dryer first controller 91 through the second switch control circuit 91a, or may be provided to open or close the dryer third power circuit 937 in accordance with the control command transmitted from the dryer second controller 92. The dryer driving unit B 1 and the dryer interface P1 may be supplied with a power when the dryer second switch 938 closes the dryer third power circuit 937.

The dryer second controller 92 and the dryer power controller 924 are always connected with a power source through the dryer first power circuit 932. However, the dryer driving unit B1 and the dryer interface P1 will be supplied with a power when a user inputs a control command to the dryer power controller 924 or when the dryer second controller 92 receives a control command from the washing machine second controller 96.

Since the dryer T of the aforementioned structure supplies a power to only the dryer second controller 92 and the dryer power controller 924 when the dryer driving unit and the interfaces B 1 and P1 are not operated, consumption of a standby power may be minimized.

Load of the washing machine L is classified into driving load and interface load, wherein the driving load of the washing machine is a washing machine driving unit B2 comprised of the washing drum driving unit 7, a water supply valve 616, a drainage pump 618, and a heating unit 63, and the interface load of the washing machine is a washing machine interface P2 comprised of the washing machine display 961, the washing machine input units 962 and 963 and the preheating request unit 965.

A power of the washing machine load B2 and P2 may be provided to be controlled by a washing machine first controller 94. The operation of the washing machine driving unit B2 may be controlled by the washing machine first controller 94 and the operation of the washing machine interface P2 may be controlled by the washing machine second controller 96.

The washing machine L is connected to the power source S through a second power line 971, and may be provided such that an alternating current power supplied to the second power line 971 is converted to a direct current power through a second converter 97 (washing machine converter). The power line 931 of the dryer T and the power line 971 of the washing machine L are provided separately (independently) from each other, whereby even though any one of the two power lines is damaged or any one of the two apparatuses is out of order, the other one may be operated.

The washing machine second controller 96 may be provided to be supplied with a power through a washing machine first power circuit 972 connected to the second converter 97, the washing machine first controller 94 may be provided to be supplied with a power through a washing machine second power circuit 975, and the loads B2 and P2 of the washing machine may be provided to be supplied with a power through a washing machine third power circuit 977.

The washing machine second power circuit 975 may be provided with a washing machine first switch 976, and the washing machine first switch 976 may be provided to open or close the washing machine second power circuit 975 in accordance with the control command of the washing machine second controller 96 or the control command of the washing machine power controller 964. The washing machine power controller 964 may be provided in the control panel Pl and thus may be provided as a means for controlling power supply to the washing machine driving unit B2 and the washing machine interface P2.

If the washing machine power controller 964 transmits a control command requesting power supply to the washing machine second controller 96 (if a user inputs a power supply request signal through the washing machine power controller), the washing machine second controller 96 controls the washing machine first switch 976 to close the washing machine second power circuit 975 through the washing machine first switch control circuit 96a. If the washing machine first switch 976 closes the washing machine second power circuit 975, the washing machine first controller 94 will be supplied with a power.

Meanwhile, the washing machine second switch 978 may be provided to open or close the washing machine third power circuit 977 in accordance with the control signal transmitted from the washing machine first controller 94 through the washing machine second switch control circuit 94a, or may be provided to open or close the washing machine third power circuit 977 in accordance with the control command transmitted from the washing machine second controller 96. The washing machine driving unit B2 and the washing machine interface P2 will be supplied with a power when the washing machine second switch 978 closes the washing machine third power circuit 977.

The washing machine second controller 96 and the washing machine power controller 964 are always connected with a power source through the washing machine first power circuit 972. However, the washing machine driving unit B2 and the washing machine interface P2 will be supplied with a power when a user inputs a control command to the washing machine power controller 964 or when the washing machine second controller 96 receives a control command from the dryer first controller 92.

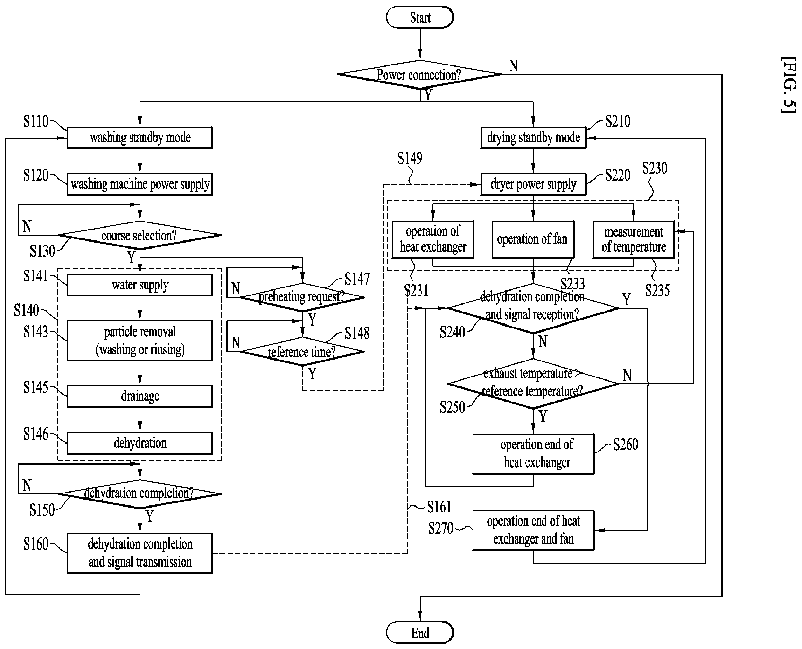

FIG. 5 illustrates an example of a control method for the aforementioned laundry treating apparatus 100.

As shown, if the first power line 931 and the second power line 971 are respectively connected to the power source S, the laundry treating apparatus 100 proceeds to a washing standby mode step S110 and a drying standby mode step S210.

The washing standby mode step S 110 is the step of supplying a power to the washing machine second controller 96 and the washing machine power controller 964 without supplying the power to the washing machine driving unit B2, the washing machine interface P2 and the washing machine first controller 94. That is, at the washing standby mode step S110, the washing machine first switch 976 maintains the state that the washing machine second power circuit 975 is opened, and the washing machine second switch 978 maintains the state that the washing machine third power circuit 977 is opened.

The washing machine power controller 964 may be provided as a switch that may operate the washing machine first switch 976 even though a power is not supplied thereto. In this case, the washing standby mode step S 110 will be the step of supplying a power to the washing machine second controller without supplying the power to the washing machine driving unit, the washing machine interface and the washing machine first controller.

The drying standby mode step S210 is the step of supplying a power to the dryer second controller 92 and the dryer power controller 924 without supplying the power to the dryer driving unit B1, the dryer interface P1 and the dryer first controller 91. That is, at the drying standby mode step S210, the dryer first switch 936 maintains the state that the dryer second power circuit 935 is opened, and the dryer second switch 938 maintains the state that the dryer third power circuit 937 is opened.

The dryer power controller 924 may be provided as a switch that may operate the dryer first switch 936 even though a power is not supplied thereto. In this case, the drying standby mode step S210 will be the step of supplying a power to the dryer second controller without supplying the power to the dryer driving unit, the dryer interface and the dryer first controller.

If a control command requesting power supply is input to the washing machine load through the washing machine power controller 964 in the middle of the washing machine standby mode step S110, a washing machine power supply step S120 is executed. The washing machine power supply step S120 is the step of supplying a power to the washing machine first controller 94, the washing machine driving unit B2 and the washing machine interface P2.

If the washing machine power supply step S120 is completed, the control method determines whether a washing course has been input to the washing machine interface P2 (S130). If a selection command of the washing course is input through the washing machine first input unit 962 and a start command of the selected washing course is input through the washing machine second input unit 963, the control method proceeds to a course execution step S140 by controlling the washing machine driving unit B2.

The course execution step S140 may be provided to perform a water supply stroke S141, a particle removal stroke S143, a drainage stroke S145 and a dehydrating stroke S146 in due order.

The water supply stroke S141 may be provided as a stroke of supplying water to the tub 61 by controlling the water supply valve 616 by the washing machine first controller 94, and the particle removal stroke S143 may be provided as a stroke of rotating the washing drum 64 by controlling the washing drum driving unit 7 by the washing machine first controller 94. The particle removal stroke S143 is the step of separating particles from laundry (washing target), and may be an example of a washing stroke or a rinsing stroke.

The drainage stroke S145 may be provided as a stroke of discharging water stored in the tub 61 to the outside of the second cabinet 5 by controlling the drainage pump 618 by the washing machine first controller 94, and the dehydrating stroke S146 may be provided as a stroke of removing water from laundry by controlling the washing drum driving unit 7 by the washing machine first controller 94. If the dehydrating stroke S146 ends (S150) (the course execution step ends), the control method resumes the washing standby mode step S 110 and switches the washing machine L to a standby mode state.

In order to shorten a drying time of laundry which has been completely washed, the control method proceeds to a power supply step S220 and a preheating step S230 of enhancing temperatures of the drying drum 2 and the supply unit 4 in the middle of the course execution step S140.

The laundry inserted into the drying drum 2 is not heat-exchanged with the air as soon as the heat exchanger 47 provided in the supply unit starts to be operated. This is because that heat energy supplied to the drying drum 2 by the operation of the heat exchanger 47 is supplied to a heat exchange path comprised of a drying drum, a duct and a heat exchanger until a temperature of the heat exchange path becomes higher than that of the laundry.

That is, the dryer sequentially proceeds to a process of heat-exchanging the air with the heat exchange path and a process of heat-exchanging the air with laundry, and the time required for drying is a sum of time required for each process.

The preheating step S230 provided in the control method of FIG. 5 may effectively shorten the time required for drying of laundry (the time required for washing and drying) by allowing the dryer T to execute a process of enhance a temperature of the heat exchange path before the operation of the washing machine L is completed.

The dryer power supply step S220 and the preheating step S230 may be provided to be performed only if a user requests preheating of the dryer through the preheating request unit 965. That is, the control method proceeds to a step S147 of determining whether a control command (preheating request signal) requesting preheating of the dryer has been input through the preheating request unit 965 after the washing machine power supply step S120 is completed. FIG. 5 illustrates that the step S147 of determining whether the preheating request signal has been input is initiated after the course selection step S130 is completed, as an example.

If the preheating request signal is input through the preheating request unit 965, the control method proceeds to a communication step S149 (first communication step) of transmitting a control command from the washing machine second controller 96 to the dryer second controller 92 through the communication circuit 98.

If the dryer second controller 92 receives the preheating request signal from the washing machine second controller 96, the control method proceeds to the dryer power supply step S220 of supplying a power to the dryer driving unit B 1. The dryer power supply step S220 may be provided with a step of supplying a power to the dryer first controller 91 by controlling the dryer first switch control circuit 92a through the dryer second controller 92, and a step of supplying a power to the dryer driving unit B1 by controlling the dryer second switch control circuit 91a through the dryer first controller 91.

At the dryer power supply step S220, the dryer interface P1 is provided so as not to be supplied with a power. In this case, the dryer third power circuit 937 should further be provided with a dryer third switch (not shown) for controlling the power supplied to the dryer interface P1. The dryer third switch may be provided as a switch arranged between the dryer second switch 938 and the dryer display P1 and controlled by any one of the dryer first controller 91 and the dryer second controller 92.

The preheating step S230 may be provided to include a supply stroke S233 of supplying the air to the drying drum 2 by operating the fans 43 and 45 by the dryer first controller 91, and a heating stroke S231 of heating the air supplied to the drying drum 2 by operating the heat exchanger 47 by the dryer first controller 91.

If the dryer provided in the laundry treating apparatus 100 is provided with an exhaust drying system (the dryer of FIG. 1), the heating stroke S231 may be provided to operate only some of a plurality of heaters. That is, as shown in FIG. 1, if the dryer is provided with two heaters 47a and 47b, the heating stroke S231 may be set to operate only one of the two heaters. This is to minimize energy consumption.

Meanwhile, if the execution time of the preheating step S230 becomes longer, power consumption of the dryer T will be increased. Therefore, the dryer power supply step S220 may be set to be initiated when the remaining time until the course execution step S140 ends becomes a preset reference time or less (S148), the washing machine second controller 96 may be provided to transmit the preheating request signal to the dryer second controller 92 (S149).

The reference time may be set to a timing point between an initiation timing of the drainage stroke S 145 and an ending timing S 150 of the dehydrating stroke or a timing point between an initiation timing S146 of the dehydrating stroke and the ending timing S 150 of the dehydrating stroke. That is, the reference time may be set to a remaining time or less from the initiation timing of the drainage stroke to the ending timing of the dehydrating stroke.

The aforementioned preheating step S230 may be set to end at the time when the dehydrating stroke ends (S150). To this end, the control method may proceed to a communication step S161 (second communication step) of allowing the washing machine second controller 96 to notify the dryer second controller 92 of ending of the dehydrating stroke.

If ending of the course execution step S140 is notified through the second communication step S161 (S240), the dryer second controller 92 may notify the dryer first controller 91 of the ending of the course execution step S140, and the dryer first controller 91 may end the operation of the heat exchanger 47 and the operation of the fan motor 45 (S270). If the preheating step ends (S270), the control method resumes the drying standby mode step S210 and switches the dryer T to a standby mode state.

The preheating step S230 executed until the second communication step S161 is initiated may be provided to control the heat exchanger 47 in accordance with the temperature of the heat exchange path. The temperature of the heat exchange path may be determined through a temperature of the air discharged from the drying drum 2, a temperature of the refrigerant circulating along the refrigerant pipe 475, etc.

That is, the laundry treating apparatus 100 having the structure of FIGS. 1 to 3 may determine a preheating state of the heat exchange path by measuring the temperature of the air entering the discharge duct 41 through the temperature sensor 411. However, the laundry treating apparatus having the structure of FIGS. 2 and 3 may determine the preheating state of the heat exchange path by measuring the temperature of the refrigerant or the temperature of the refrigerant pipe 475.

The control method may proceed to a measuring step S235 of measuring the temperature of the air discharged from the drying drum 2 through the temperature sensor 411 in the middle of the preheating step S230. The measuring step S235 may be set to be periodically repeated after the preheating step S230 is initiated and to end when the preheating step S230 ends.

If the second communication step S161 is not initiated and the temperature measured at the measuring step S235 is lower than a preset reference temperature (S250), the control method maintains the preheating step S230.

However, if the second communication step S161 is not initiated and the temperature measured at the measuring step S235 is higher than the preset reference temperature (S250), the control method stops the heating step S231 (S260). That is, if the temperature of the air entering the discharge duct 41 is higher than the reference temperature (S250), the preheating step S230 maintains the supply stroke S233 but temporarily ends the heating stroke S231.

After the heating stroke ends (S260), the control method resumes the step S240 of determining whether the washing machine second controller 96 has transmitted a dehydration completion signal to the dryer second controller 92.

Meanwhile, even though the preheating step S230 executes the supply stroke S233 only, the measuring step S235 is periodically executed, and the heating stroke S231 is resumed when the temperature of the air, which is measured while the supply stroke S233 is being executed, is the reference temperature or less.

In the dryer, considering that the temperature of the air discharged from the drying drum 2 is 65°C, approximately, at the time when heat exchange between laundry inserted into the drying drum 2 and the air is actively performed, the reference temperature may be set to 55°C to 75°C.

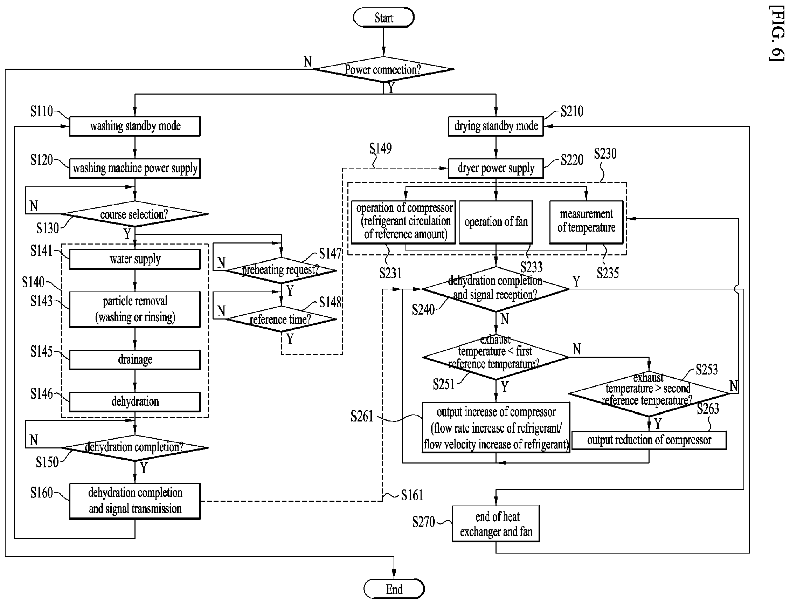

FIG. 6 illustrates another embodiment of a control method for a laundry treating apparatus having the structure of FIGS. 2 and 3. This embodiment is different from the control method of FIG. 5 in that the output of the compressor 473 is controlled in accordance with the temperature of the heat exchange path.

That is, the control method according to this embodiment proceeds to a step S251 of determining whether the temperature measured at the measuring step S235 is less than a preset first reference temperature (S251). If the temperature measured by the temperature sensor 411 is less than the first reference temperature, the dryer first controller 91 increases the output of the compressor 473 to increase flow velocity of the refrigerant (S261). This is to enhance the temperature of the heat exchange path for a short time.

If the compressor 473 has a structure for moving the refrigerant by using a centrifugal force of an impeller, etc., its output may be enhanced by enhancing the number of revolutions of the impeller. If the compressor 473 has a structure for compressing the refrigerant by using a piston that linearly reciprocates, its output may be enhanced by shortening a reciprocating period of the piston.

Meanwhile, if the temperature measured at the measuring step S235 is the first reference temperature or more, the control method proceeds to a step S253 of determining whether the temperature of the air discharged from the drying drum 2 is higher than a second reference temperature (set to be higher than the first reference temperature).

If the temperature entering the discharge duct 41 is higher than the second reference temperature, the dryer first controller 91 controls the compressor to reduce flow velocity of the refrigerant (S263).

However, if the temperature measured at the measuring step S235 is the first reference temperature or more and the second reference temperature or less, the control method periodically determines whether a dehydration completion signal has been transmitted while the heating stroke S231 and the supply stroke S233 are being maintained (flow velocity of the refrigerant is being maintained) (S240).

Considering that the temperature of the air discharged from the drying drum 2 is 65°C, approximately, at the time when heat exchange between laundry inserted into the drying drum 2 and the air is actively performed, the first reference temperature may be set to 55°C and the second reference temperature may be set to 75°C.

The aforementioned control method may be applied to the laundry treating apparatus in which the controllers 91 and 92 for controlling the dryer and the controllers 94 and 96 for controlling the washing machine are integrated. That is, the aforementioned control method may be applied to a laundry treating apparatus provided with a first controller for controlling the dryer driving unit B1 and the washing machine driving unit B2 and a second controller for controlling the dryer interface P1 and the washing machine interface P2. In this case, the control method may be provided to include a standby mode step, a washing machine power supply step, a course selection step, a course execution step, a dryer power supply step, and a preheating step.

The standby mode step will be the step of supplying a power to the second controller 96 without supplying the power to the washing machine driving unit B2, the washing machine interface P2, the dryer driving unit B1, the dryer interface P1 and the first controller.

The washing machine power supply step will be the step of supplying a power to the first controller, the washing machine driving unit B2 and the washing machine interface P2, the course selection step will be the step of inputting a washing course through the washing machine interface P2, and the course execution step may be set to execute a water supply stroke, a particle removal stroke, a drainage stroke and a dehydrating stroke.

After the course selection step is completed, if the preheating request signal is input through the preheating request unit 965, this embodiment proceeds to a dryer power supply step for supplying a power to the dryer driving unit B1 by the first controller. The preheating step may be executed after the dryer power supply step is initiated, and the preheating step may be provided to include a supply stroke and a heating stroke. In order to minimize power consumption at the preheating step, the dryer power supply step is preferably set to be initiated when the remaining time until the course execution time ends is the reference time or less.

The aforementioned laundry treating apparatus and the aforementioned control method for the laundry treating apparatus may be carried out by various modifications. That is, the aforementioned control method of the laundry treating apparatus may be applied to a laundry treating apparatus comprising a control system different from the control system shown in FIG. 4.

In the laundry treating apparatus provided to include the washing machine L provided with the tub 61 and the washing drum 64 and the dryer T provided with the drying drum 2 and the supply unit 4, the control method for the laundry treating apparatus may be provided to include a washing machine power supply step S120 of supplying a power to the washing machine interface P2, a course execution step S140 of executing a washing course by the washing machine L if the washing course is input to the washing machine interface P2 (S130), a dryer power supply step S220 of supplying a power to the dryer T if a preheating request signal is input through the washing machine interface P2, and a preheating step S230 of supplying the heated air to the drying drum by operating the supply unit 4.

The preheating step S230 may be provided to include a supply stroke S233 of supplying the air to the drying drum 2 and a heating stroke S231 of heating the air supplied to the drying drum 2.

The dryer power supply step S220 may be provided to include a step of activating the dryer display 921 and a step of supplying a power to the supply unit 4. The step of activating the dryer display and the step of supplying the power to the supply unit may be performed sequentially or simultaneously. In any case, the dryer display 921, which is in an inactive state, is activated when the preheating request signal is received from the washing machine L.

The preheating request signal may be transmitted to the dryer T through the communication step S149, and the dryer power supply step S220 may be initiated after the communication step S149 is completed. The communication step S149 may be provided to be initiated if the remaining time until the course execution time S140 ends reaches the reference time or less (S148).

If the course execution step S140 is provided to include the water supply stroke S141, the particle removal stroke S143, the drainage stroke S145 and the dehydrating stroke S147, the reference time may be set to the time less than the remaining time from an initiation timing of the drainage stroke S145 to the ending timing of the dehydrating stroke S147. Unlike this case, the reference time may be set to the time less than the remaining time from an initiation timing of the dehydrating stroke S147 to the ending timing of the dehydrating stroke S147.

Meanwhile, the preheating step S230 may execute only the supply stroke S233 if the temperature of the air discharged from the drying drum is higher than the reference temperature (temporary stop of the heating stroke). The heating stroke S231, which is temporarily stopped, may be initiated when the temperature of the air discharged from the drying drum 2 is the reference temperature or less. The temperature of the air discharged from the drying drum 2 may be measured through the measuring step S235, and the measuring step has been described as above and therefore its detailed description will be omitted. The preheating step S230 may end when the dehydrating stroke S146 ends.

In the case that the dryer T is provided as a circulating drying system, when the temperature of the air discharged from the drying drum 2 in the middle of the preheating step S230 is less than the first reference temperature, the compressor 473 may increase flow velocity of the refrigerant (see FIG. 6). This is to enhance the temperature of the heat exchange path in a short time by increasing the output of the compressor 473 (S261).

Meanwhile, when the temperature of the air discharged from the drying drum 2 in the middle of the preheating step S230 is higher than the first reference temperature and lower than the second reference temperature (temperature higher than the first reference temperature), the compressor 473 may maintain flow velocity of the refrigerant, and when the temperature of the air is higher than the second reference temperature, the compressor 473 may be controlled to reduce flow velocity of the refrigerant.

Since the aforementioned laundry treating apparatus and the aforementioned control method for the laundry treating apparatus may be carried by various modifications, the scope of the invention is not limited to the aforementioned embodiments.

## Claims

1. A control method for a laundry treating apparatus (100) comprising a washing machine (L) provided with a tub (61) in which water is stored and a washing drum (64) provided inside the tub (61), storing laundry therein, and a dryer (T) provided with a drying drum (2) in which laundry is stored and a supply unit (4) for removing water from laundry by supplying the air to the drying drum (2), the control method comprising:
a washing machine power supply step (S120) of supplying a power to a washing machine interface (P2) provided to receive a control command;
a course execution step (S140) of executing a washing course by the washing machine (L) if the washing course is input to the washing machine interface (P2);
a dryer power supply step (S220) of supplying a power to the dryer (T) if a preheating request signal is input through the washing machine interface (P2); and
a preheating step (S230) of including a supply stroke (S141) of supplying the air to the drying drum (2) and a heating stroke (S231) of heating the air supplied to the drying drum (2).

2. The control method of claim 1, further comprising activating a dryer display (921) if the preheating request signal is received, and/or
wherein the dryer power supply step (S220) includes a step of activating a dryer display (921) and a step of supplying a power to the supply unit (4), and/or
wherein the method further comprises a communication step (S149) of transmitting the preheating request signal to the dryer (T) by the washing machine (L) if the preheating request signal is input through the washing machine interface (P2).

3. The control method of claim 1 or 2, wherein the dryer power supply step (S220) is initiated when a remaining time until the course execution time ends is a preset reference time or less.

4. The control method of claim 3, wherein the course execution step (S140) sequentially executes a water supply stroke (S141) of supplying water to the tub (61), a particle removal stroke (S143) of rotating the washing drum (64), a drainage stroke (S145) of discharging water of the tub (61) to the outside of the tub (61), and a dehydrating stroke (S146) of removing water from laundry by rotating the washing drum (64), and the reference time is set to a remaining time or less from an initiation timing of the drainage stroke (S145) to an ending timing of the dehydrating stroke (S146), or
wherein the course execution step (S140) sequentially executes a water supply stroke (S141) of supplying water to the tub (61), a particle removal stroke (S143) of rotating the washing drum (64), a drainage stroke (S145) of discharging water of the tub (61) to the outside of the tub (61), and a dehydrating stroke (S146) of removing water from laundry by rotating the washing drum (64), and the reference time is set to a remaining time or less from an initiation timing of the dehydrating stroke (S146) to an ending timing of the dehydrating stroke (S146).

5. The control method of any one of claims 1 to 4, further comprising a measuring step of measuring a temperature of the air discharged from the drying drum (2) in the middle of the preheating step (S230), wherein the preheating step (S230) stops the heating stroke (5231) if the temperature measured at the measuring step is higher than a preset reference temperature.

6. The control method of claim 5, wherein the preheating step (S230) resumes the heating stroke (S231) when the temperature measured at the measuring step is the reference temperature or less, and/or
wherein the preheating step (S230) ends when the washing machine (L) notifies the dryer (T) of ending of the dehydrating stroke (S146), and/or
wherein the heating stroke (S231) operates only some of a plurality of heaters provided in the supply unit (4), heating the air.

7. The control method of claim 5 or 6, wherein the supply unit (4) includes a duct for re-supplying the air discharged from the drying drum (2) to the drying drum (2), a refrigerant path for forming a path through which a refrigerant circulates, a compressor (473) for circulating the refrigerant along the refrigerant path, a heat absorption unit (471) for transferring heat owned by the air entering the duct from the drying drum (2) to the refrigerant, and a heat emission unit (472) for transferring heat owned by the refrigerant to the air that has passed through the heat absorption unit (471), and controls the compressor (473) to increase flow velocity of the refrigerant when the temperature of the air discharged from the drying drum (2), which is measured in the middle of the preheating step (S230), is less than a preset first reference temperature.

8. The control method of claim 7, wherein the supply unit (4) controls the compressor (473) to maintain flow velocity of the refrigerant when the temperature of the air discharged from the drying drum (2), which is measured in the middle of the preheating step (S230), is higher than the first reference temperature and lower than a second reference temperature set to be higher than the first reference temperature.

9. The control method of claim 6, wherein the supply unit (4) controls the compressor (473) to reduce flow velocity of the refrigerant when the temperature of the air discharged from the drying drum (2), which is measured in the middle of the preheating step (S230), is higher than the second reference temperature.

10. The control method of claim 1, further comprising
a washing standby mode step (S110) of supplying a power to a washing machine second controller (96) controlling the washing machine interface (P2) without supplying the power to a washing machine driving unit (B2), a washing machine first controller (94) controlling the washing machine driving unit (B2), and the washing machine interface (P2);
a drying standby mode step (S210) of supplying the power to a dryer second controller (92) controlling a dryer interface (P1) without supplying the power to a dryer driving unit (B1), a dryer first controller controlling the dryer driving unit (B1) and the dryer interface (P1);
the washing machine power supply step (S120) supplying the power to the washing machine driving unit (B2), the washing machine first controller (94) and the washing machine interface (P2);
the course execution step (S140) executing a washing course by controlling the washing machine driving unit (B2) if the washing course is input through the washing machine interface (P2);
a communication step (S149) of transmitting a preheating request signal from the washing machine second controller (96) to the dryer second controller (92) if the preheating request signal is input through the washing machine interface (P2);
the dryer power supply step (S220) supplying the power to the dryer driving unit (B1) if the dryer second controller (92) receives the preheating request signal; and
the preheating step (S230) including a supply stroke (S141) of supplying the air to a drying drum (2) by controlling the dryer driving unit (B1) and a heating stroke (S231) of heating the air supplied to the drying drum (2).

11. The control method of claim 10, wherein the dryer power supply step (S220) is initiated when a remaining time until the course execution time ends is a preset reference time or less,
wherein the course execution step (S140) preferably sequentially executes a water supply stroke (S141) of supplying water to a tub (61), a particle removal stroke (S143) of rotating a washing drum (64) provided inside the tub (61) to store laundry therein, a drainage stroke (S145) of discharging water of the tub (61), and a dehydrating stroke (S146) of removing water from laundry by rotating the washing drum (64), and the reference time is set to a remaining time or less from an initiation timing of the drainage stroke (S145) to an ending timing of the dehydrating stroke (S146) or a remaining time or less from an initiation timing of the dehydrating stroke (S146) to an ending timing of the dehydrating stroke (S146).

12. The control method of any one of claim 11, further comprising a measuring step of measuring a temperature of the air discharged from the drying drum (2) in the middle of the preheating step (S230), wherein the preheating step (S230) stops the heating stroke (S231) if the temperature measured at the measuring step is higher than a preset reference temperature, and resumes the heating stroke (S231) when the temperature measured at the measuring step is the reference temperature or less,
wherein the preheating step (S230) preferably ends when the washing machine second controller (96) notifies the dryer second controller (92) of ending of the dehydrating stroke (S146), and/or
wherein the heating stroke (S231) preferably operates only some of a plurality of heaters provided to heat the air supplied to the drying drum (2).

13. The control method of claim 12, wherein the heating stroke (5231) is executed through a duct for re-supplying the air discharged from the drying drum (2) to the drying drum (2), a refrigerant path for forming a path through which a refrigerant circulates, a compressor (473) for circulating the refrigerant along the refrigerant path, a heat absorption unit (471) for transferring heat owned by the air entering the duct from the drying drum (2) to the refrigerant, and a heat emission unit (472) for transferring heat owned by the refrigerant to the air that has passed through the heat absorption unit (471), and the dryer first controller controls the compressor (473) to increase flow velocity of the refrigerant when the temperature of the air discharged from the drying drum (2), which is measured in the middle of the preheating step (S230), is less than a preset first reference temperature,
wherein the dryer first controller preferably controls the compressor (473) to maintain flow velocity of the refrigerant when the temperature of the air discharged from the drying drum (2), which is measured in the middle of the preheating step (S230), is higher than the first reference temperature and lower than a second reference temperature set to be higher than the first reference temperature, and/or
wherein the dryer first controller preferably controls the compressor (473) to reduce flow velocity of the refrigerant when the temperature of the air discharged from the drying drum (2), which is measured in the middle of the preheating step (S230), is higher than the second reference temperature.

14. The control method of claim 1, further comprising:
a dryer standby mode step (S210) of supplying a power to a dryer second controller (92) controlling a dryer interface (P1) and the washing machine interface (P2) without supplying the power to a washing machine driving unit (B2), the washing machine interface (P2), a dryer driving unit (B1), the dryer interface (P1), and a washing machine first controller (94) controlling the washing machine driving unit (B2) and the dryer driving unit (B 1);
the course execution step (S140) executing a washing course by controlling the washing machine driving unit (B2) if the washing course is input through the washing machine interface (P2);
the dryer power supply step (S220) supplying the power to the dryer driving unit (B1) if a preheating request signal is input through the washing machine interface (P2); and
the preheating step (S230) including a supply stroke (S141) of supplying the air to a drying drum (2) through the dryer driving unit (B1) and a heating stroke (S231) of heating the air supplied to the drying drum (2).

15. The control method of claim 14, wherein the dryer power supply step (S220) is initiated when a remaining time until the course execution time ends is a preset reference time or less.

## Patentansprüche

1. Steuerungsverfahren für eine Wäschebehandlungsvorrichtung (100), die eine Waschmaschine (L), die mit einem Bottich (61), in dem Wasser gespeichert wird, und einer Waschtrommel (64) versehen ist, die innerhalb des Bottichs (61) vorgesehen ist und in der Wäsche gespeichert wird, und einen Trockner (T) aufweist, der mit einer Trockentrommel (2), in der Wäsche gespeichert wird, und einer Zufuhreinheit (4) zum Entfernen von Wasser aus der Wäsche durch Zuführen von Luft zur Trockentrommel (2) versehen ist, wobei das Steuerungsverfahren aufweist:
einen Waschmaschinen-Stromzufuhrschritt (S120) zum Zuführen von Strom zu einer Waschmaschinen-Schnittstelle (P2), die zum Empfangen eines Steuerbefehls vorgesehen ist;
einen Gangausführungsschritt (S140) zum Ausführen eines Waschgangs durch die Waschmaschine (L), wenn der Waschgang an der Waschmaschinen-Schnittstelle (P2) eingegeben wird;
einen Trockner-Stromzufuhrschritt (S220) zum Zuführen von Strom zum Trockner (T), wenn ein Vorheiz-Anforderungssignal über die Waschmaschinen-Schnittstelle (P2) eingegeben wird; und
einen Vorheizschritt (S230), der einen Zuführungstakt (S141) zum Zuführen der Luft zur Trockentrommel (2) und einen Heiztakt (S231) zum Heizen der der Trockentrommel (2) zugeführten Luft enthält.

2. Steuerungsverfahren nach Anspruch 1, das ferner das Aktiveren einer Trockneranzeige (921) aufweist, wenn das Vorheiz-Anforderungssignal empfangen wird, und/oder
wobei der Trockner-Stromzufuhrschritt (S220) einen Schritt zum Aktivieren einer Trockneranzeige (921) und einen Schritt zum Zuführen von Strom zur Zufuhreinheit (4) umfasst, und/oder
wobei das Verfahren ferner einen Kommunikationsschritt (S149) zum Übertragen des Vorheiz-Anforderungssignals durch die Waschmaschine (L) an den Trockner (T) aufweist, wenn das Vorheiz-Anforderungssignal über die Waschmaschinen-Schnittstelle (P2) eingegeben wird.

3. Steuerungsverfahren nach Anspruch 1 oder 2, wobei der Trockner-Stromzufuhrschritt (S220) eingeleitet wird, wenn eine verbleibende Zeit bis zum Ende der Gangausführungszeit eine voreingestellte Referenzzeit oder weniger ist.

4. Steuerungsverfahren nach Anspruch 3, wobei der Gangausführungsschritt (S140) nacheinander einen Wasserzufuhrtakt (S141) zum Zuführen von Wasser in den Bottich (61), einen Partikelentfernungstakt (S143) zum Drehen der Waschtrommel (64), einen Ablauftakt (S145) zum Ableiten von Wasser aus dem Bottich (61) zum Äußeren des Bottichs (61) und einen Entwässerungstakt (S146) zum Entfernen von Wasser aus der Wäsche durch Drehen der Waschtrommel (64) ausführt, und die Referenzzeit auf eine verbleibende Zeit oder weniger von einem Startzeitpunkt des Ablauftakts (S145) bis zu einem Endzeitpunkt des Entwässerungstakts (S146) eingestellt wird, oder
wobei der Gangausführungsschritt (S140) nacheinander einen Wasserzufuhrtakt (S141) zum Zuführen von Wasser zu dem Bottich (61), einen Partikelentfernungstakt (S143) zum Drehen der Waschtrommel (64), einen Ablauftakt (S145) zum Ableiten von Wasser aus dem Bottich (61) zum Äußeren des Bottichs (61) und einen Entwässerungstakt (S146) zum Entfernen von Wasser aus der Wäsche durch Drehen der Waschtrommel (64) ausführt, und die Referenzzeit auf eine verbleibende Zeit oder weniger von einem Startzeitpunkt des Entwässerungstakts (S146) bis zu einem Endzeitpunkt des Entwässerungstakts (S146) eingestellt wird.

5. Steuerungsverfahren nach einem der Ansprüche 1 bis 4, das ferner einen Messschritt zum Messen einer Temperatur der von der Trockentrommel (2) abgegebenen Luft in der Mitte des Vorheizschritts (S230) aufweist, wobei der Vorheizschritt (S230) den Heiztakt (S231) stoppt, wenn die im Messschritt gemessene Temperatur höher als eine voreingestellte Referenztemperatur ist.

6. Steuerungsverfahren nach Anspruch 5, wobei der Vorheizschritt (S230) den Heiztakt (S231) wieder aufnimmt, wenn die im Messschritt gemessene Temperatur die Referenztemperatur oder weniger beträgt, und/oder
wobei der Vorheizschritt (S230) endet, wenn die Waschmaschine (L) dem Trockner (T) das Ende des Entwässerungstakts (S146) mitteilt, und/oder
wobei der Erwärmungsschritt (S231) nur einige von mehreren in der Zufuhreinheit (4) vorgesehenen Heizern betreibt, die die Luft heizen.

7. Steuerungsverfahren nach Anspruch 5 oder 6, wobei die Zufuhreinheit (4) einen Kanal zum erneuten Zuführen der von der Trockentrommel (2) abgegebenen Luft zur Trockentrommel (2), einen Kältemittelweg zum Bilden eines Weges, durch den ein Kältemittel zirkuliert, einen Verdichter (473) zum Zirkulieren des Kältemittels entlang des Kältemittelweges, eine Wärmeabsorptionseinheit (471) zum Übertragen von Wärme, die die in den Kanal eintretende Luft von der Trockentrommel (2) besitzt, auf das Kältemittel, und eine Wärmeabgabeeinheit (472) zum Übertragen von Wärme umfasst, die das Kältemittel besitzt, auf die Luft, die durch die Wärmeabsorptionseinheit (471) hindurchgegangen ist, und den Verdichter (473) steuert, um die Strömungsgeschwindigkeit des Kältemittels zu erhöhen, wenn die Temperatur der von der Trockentrommel (2) abgegebenen Luft, die in der Mitte des Vorwärmschritts (S230) gemessen wird, niedriger als eine voreingestellte erste Referenztemperatur ist.

8. Steuerungsverfahren nach Anspruch 7, wobei die Zufuhreinheit (4) den Verdichter (473) steuert, die Strömungsgeschwindigkeit des Kältemittels aufrechtzuerhalten, wenn die Temperatur der von der Trockentrommel (2) abgegebenen Luft, die in der Mitte des Vorheizschritts (S230) gemessen wird, höher als die erste Referenztemperatur und niedriger als eine zweite Referenztemperatur ist, die höher als die erste Referenztemperatur eingestellt ist.

9. Steuerungsverfahren nach Anspruch 6, wobei die Zufuhreinheit (4) den Verdichter (473) so steuert, dass die Strömungsgeschwindigkeit des Kältemittels verringert wird, wenn die in der Mitte des Vorheizschritts (S230) gemessene Temperatur der von der Trockentrommel (2) abgegebenen Luft höher als die zweite Referenztemperatur ist.

10. Steuerungsverfahren nach Anspruch 1, das ferner aufweist:
einen Waschbereitschaftsmodusschritt (S110) zum Zuführen von Strom zu einem zweiten Waschmaschinen-Controller (96), der die Waschmaschinen-Schnittstelle (P2) steuert, ohne den Strom einer Waschmaschinen-Antriebseinheit (B2), einem ersten Waschmaschinen-Controller (94), der die Waschmaschinen-Antriebseinheit (B2) steuert, und der Waschmaschinen-Schnittstelle (P2) zuzuführen;
einen Trocknungsbereitschaftsmodusschritt (S210) zum Zuführen von Strom zu einem zweiten Trockner-Controller (92), der eine Trockner-Schnittstelle (P1) steuert, ohne den Strom einer Trockner-Antriebseinheit (B1) zuzuführen, wobei ein erster Trockner-Controller die Trockner-Antriebseinheit (B1) und die Trockner-Schnittstelle (P1) steuert;
den Waschmaschinen-Stromzufuhrschritt (S120), der der Waschmaschinen-Antriebseinheit (B2), dem ersten Waschmaschinen-Controller (94) und der Waschmaschinen-Schnittstelle (P2) Strom zuführt;
den Gangausführungsschritt (S140), der einen Waschgang durch Steuern der Waschmaschinen-Antriebseinheit (B2) ausführt, wenn der Waschgang über die Waschmaschinen-Schnittstelle (P2) eingegeben wird;
einen Kommunikationsschritt (S149) zum Übertragen eines Vorheiz-Anforderungssignals vom zweiten Waschmaschinen-Controller (96) an den zweiten Trockner-Controller (92), wenn das Vorheiz-Anforderungssignal über die Waschmaschinen-Schnittstelle (P2) eingegeben wird;
den Trockner-Stromzufuhrschritt (S220), der der Trockner-Antriebseinheit (B1) Strom zuführt, wenn der zweite Trockner-Controller (92) das Vorheiz-Anforderungssignal empfängt; und
den Vorheizschritt (S230), der einen Zufuhrtakt (S141) zum Zuführen der Luft zu einer Trockentrommel (2) durch Steuern der Trockner-Antriebseinheit (B1) und einen Heiztakt (S231) zum Heizen der der Trockentrommel (2) zugeführten Luft umfasst.

11. Steuerungsverfahren nach Anspruch 10, wobei der Trockner-Stromzufuhrschritt (S220) eingeleitet wird, wenn eine verbleibende Zeit bis zum Ende der Gangausführungszeit eine voreingestellte Referenzzeit oder weniger ist,
wobei der Gangausführungsschritt (S140) vorzugsweise nacheinander einen Wasserzufuhrtakt (S141) zum Zuführen von Wasser zu einem Bottich (61), einen Partikelentfernungstakt (S143) zum Drehen einer Waschtrommel (64), die innerhalb des Bottichs (61) vorgesehen ist, um Wäsche darin zu speichern, einen Ablauftakt (S145) zum Ableiten von Wasser aus dem Bottich (61) und einen Entwässerungstakt (S146) zum Entfernen von Wasser aus der Wäsche durch Drehen der Waschtrommel (64) ausführt, und die Referenzzeit auf eine verbleibende Zeit oder weniger von einem Einleitungszeitpunkt des Ablauftakts (S145) bis zu einem Endzeitpunkt des Entwässerungstakts (S146) oder eine verbleibende Zeit oder weniger von einem Einleitungszeitpunkt des Entwässerungstakts (S146) bis zu einem Endzeitpunkt des Entwässerungstakts (S146) eingestellt wird.

12. Steuerungsverfahren nach einem der Ansprüche 11, das ferner einen Messschritt zum Messen einer Temperatur der von der Trockentrommel (2) abgegebenen Luft in der Mitte des Vorheizschritts (S230) aufweist, wobei der Vorheizschritt (S230) den Heiztakt (S231) stoppt, wenn die im Messschritt gemessene Temperatur höher als eine voreingestellte Referenztemperatur ist, und den Heiztakt (S231) wieder aufnimmt, wenn die im Messschritt gemessene Temperatur die Referenztemperatur oder niedriger ist,
wobei der Vorheizschritt (S230) vorzugsweise endet, wenn der zweite Waschmaschinen-Controller (96) dem zweiten Trockner-Controller (92) das Ende des Entwässerungstakts (S146) mitteilt, und/oder
wobei der Heiztakt (S231) vorzugsweise nur einige von mehreren Heizern betreibt, die vorgesehen sind, um die der Trockentrommel (2) zugeführte Luft zu heizen.

13. Steuerungsverfahren nach Anspruch 12, wobei der Heiztakt (S231) durch einen Kanal zum erneuten Zuführen der von der Trockentrommel (2) abgegebenen Luft zur Trockentrommel (2), einen Kältemittelweg zum Bilden eines Weges, durch den ein Kältemittel zirkuliert, einen Verdichter (473) zum Zirkulieren des Kältemittels entlang des Kältemittelweges, eine Wärmeabsorptionseinheit (471) zum Übertragen von Wärme, die die in den Kanal eintretende Luft von der Trockentrommel (2) besitzt, auf das Kältemittel, und eine Wärmeabgabeeinheit (472) zum Übertragen von Wärme ausgeführt wird, die das Kältemittel besitzt, an die Luft, die durch die Wärmeabsorptionseinheit (471) hindurchgegangen ist, und der erste Trockner-Controller den Verdichter (473) steuert, die Strömungsgeschwindigkeit des Kältemittels zu erhöhen, wenn die Temperatur der von der Trockentrommel (2) abgegebenen Luft, die in der Mitte des Vorheizschritts (S230) gemessen wird, niedriger als eine voreingestellte erste Referenztemperatur ist,
wobei der erste Trockner-Controller vorzugsweise den Verdichter (473) steuert, die Strömungsgeschwindigkeit des Kältemittels aufrechtzuerhalten, wenn die Temperatur der von der Trockentrommel (2) abgegebenen Luft, die in der Mitte des Vorheizschritts (S230) gemessen wird, höher als die erste Referenztemperatur und niedriger als eine zweite Referenztemperatur ist, die höher als die erste Referenztemperatur eingestellt ist, und/oder
wobei der erste Trockner-Controller vorzugsweise den Verdichter (473) steuert, die Strömungsgeschwindigkeit des Kältemittels zu verringern, wenn die Temperatur der von der Trockentrommel (2) abgegebenen Luft, die in der Mitte des Vorheizschritts (S230) gemessen wird, höher ist als die zweite Referenztemperatur.

14. Steuerungsverfahren nach Anspruch 1, das ferner aufweist:
einen Trocknerbereitschaftsmodusschritt (S210) zum Zuführen von Strom zu einem zweiten Trockner-Controller (92), der eine Trockner-Schnittstelle (P1) und die Waschmaschinen-Schnittstelle (P2) steuert, ohne einer Waschmaschinen-Antriebseinheit (B2), der Waschmaschine-Schnittstelle (P2), einer Trockner-Antriebseinheit (B1), der Trockner-Schnittstelle (P1) und einem ersten Waschmaschinen-Controller (94) Strom zuzuführen, der die Waschmaschinen-Antriebseinheit (B2) und die Trockner-Antriebseinheit (B 1) steuert;
den Gangausführungsschritt (S140), der einen Waschgang durch Steuern der Waschmaschinen-Antriebseinheit (B2) ausführt, wenn der Waschgang über die Waschmaschinen-Schnittstelle (P2) eingegeben wird;
den Trockner-Stromzufuhrschritt (S220), der der Trockner-Antriebseinheit (B1) Strom zuführt, wenn ein Vorheiz-Anforderungssignal über die Waschmaschinen-Schnittstelle (P2) eingegeben wird; und
den Vorheizschritt (S230), der einen Zufuhrtakt (S141) zum Zuführen der Luft zu einer Trockentrommel (2) durch die Trockner-Antriebseinheit (B 1) und einen Heiztakt (S231) zum Heizen der der Trockentrommel (2) zugeführten Luft umfasst.

15. Steuerungsverfahren nach Anspruch 14, wobei der Trockner-Stromzufuhrschritt (S220) eingeleitet wird, wenn eine verbleibende Zeit bis zum Ende der Gangausführungszeit eine voreingestellte Referenzzeit oder weniger ist.

## Revendications

1. Procédé de commande d'une machine à traiter le linge (100) comprenant un lave-linge (L) pourvu d'une cuve (61) où est stockée l'eau et d'un tambour de lavage (64) prévu à l'intérieur de la cuve (61), où le linge est stocké, et un sèche-linge (T) pourvu d'un tambour de séchage (2) où est stocké le linge et d'une unité de refoulement (4) pour éliminer l'eau du linge en refoulant de l'air vers le tambour de séchage (2), ledit procédé de commande comprenant :
une étape d'alimentation électrique du lave-linge (S120) consistant à alimenter en courant une interface de lave-linge (P2) prévue pour recevoir une instruction de commande ;
une étape d'exécution de programme (S 140), où un programme de lavage est exécuté par le lave-linge (L) si ledit programme de lavage a été entré via l'interface de lave-linge (P2) ;
une étape d'alimentation électrique du sèche-linge (S220) consistant à alimenter en courant le sèche-linge (T) si un signal de demande de préchauffage a été entré via l'interface de lave-linge (P2) ; et
une étape de préchauffage (S230) comprenant un cycle de refoulement (S141) pour refouler de l'air vers le tambour de séchage (2), et un cycle de chauffage (S231) pour chauffer l'air refoulé vers le tambour de séchage (2).

2. Procédé de commande selon la revendication 1, comprenant en outre l'activation d'un afficheur (921) de sèche-linge si le signal de demande de préchauffage est reçu, et/ou
où l'étape d'alimentation électrique du sèche-linge (S220) comprend une étape d'activation d'afficheur (921) de sèche-linge et une étape d'alimentation électrique de l'unité de refoulement (4), et/ou
où ledit procédé comprend en outre une étape de communication (S149) consistant à transmettre le signal de demande de préchauffage au sèche-linge (T) par le lave-linge (L) si le signal de demande de préchauffage a été entré via l'interface de lave-linge (P2).

3. Procédé de commande selon la revendication 1 ou la revendication 2, où l'étape d'alimentation électrique du sèche-linge (S220) est déclenchée si un temps restant jusqu'à la fin de l'exécution de programme est inférieur ou égal à un temps de référence prédéfini.

4. Procédé de commande selon la revendication 3, où l'étape d'exécution de programme (S140) exécute séquentiellement un cycle d'alimentation en eau (S141) de la cuve (61), un cycle d'élimination des particules (S143) par rotation du tambour de lavage (64), un cycle de vidange (S145) d'évacuation de l'eau de la cuve (61) vers l'extérieur de la cuve (61), et un cycle de déshydratation (S146) consistant à éliminer l'eau du linge par rotation du tambour de lavage (64), et où le temps de référence est fixé sur une durée restante ou sur une durée inférieure entre le moment de déclenchement du cycle de vidange (S145) et le moment de fin du cycle de déshydratation (S 146), ou
où l'étape d'exécution de programme (S140) exécute séquentiellement un cycle d'alimentation en eau (S141) de la cuve (61), un cycle d'élimination des particules (S143) par rotation du tambour de lavage (64), un cycle de vidange (S145) de l'eau de la cuve (61) vers l'extérieur de la cuve (61), et un cycle de déshydratation (S146) consistant à éliminer l'eau du linge par rotation du tambour de lavage (64), et où le temps de référence est réglé sur une durée restante ou sur une durée inférieure entre le moment de déclenchement du cycle de déshydratation (S146) et le moment de fin du cycle de déshydratation (S146).

5. Procédé de commande selon l'une des revendications 1 à 4, comprenant en outre une étape de mesure d'une température de l'air évacué du tambour de séchage (2) au milieu de l'étape de préchauffage (S230), ladite étape de préchauffage (S230) arrêtant le cycle de chauffage (S231) si la température mesurée lors de l'étape de mesure est supérieure à une température de référence prédéfinie.

6. Procédé de commande selon la revendication 5, où l'étape de préchauffage (S230) reprend le cycle de chauffage (S231) si la température mesurée lors de l'étape de mesure est égale ou inférieure à la température de référence, et/ou
où l'étape de préchauffage (S230) se termine si le lave-linge (L) informe le sèche-linge (T) de la fin du cycle de déshydratation (S146), et/ou
où le cycle de chauffage (S231) n'active qu'une partie d'une pluralité de dispositifs de chauffage présents dans l'unité de refoulement (4), par chauffage d'air.

7. Procédé de commande selon la revendication 5 ou la revendication 6, où l'unité de refoulement (4) comprend un conduit pour refouler à nouveau l'air évacué du tambour de séchage (2) vers le tambour de séchage (2), un trajet de réfrigérant formant un trajet de circulation d'un réfrigérant, un compresseur (473) faisant circuler le réfrigérant le long du trajet de réfrigérant, une unité d'absorption de chaleur (471) pour le transfert au réfrigérant de la chaleur contenue dans l'air entrant dans le conduit en provenance du tambour de séchage (2), et une unité d'émission de chaleur (472) pour le transfert de la chaleur du réfrigérant à l'air traversant l'unité d'absorption de chaleur (471), et commande le compresseur (473) pour augmenter la vitesse d'écoulement du réfrigérant si la température de l'air évacué du tambour de séchage (2), mesurée au milieu de l'étape de préchauffage (S230), est inférieure à une première température de référence prédéfinie.

8. Procédé de commande selon la revendication 7, où l'unité de refoulement (4) commande le compresseur (473) pour maintenir la vitesse d'écoulement du réfrigérant si la température de l'air évacué du tambour de séchage (2), mesurée au milieu de l'étape de préchauffage (S230), est supérieure à la première température de référence et inférieure à une deuxième température de référence fixée de manière à être supérieure à la première température de référence.

9. Procédé de commande selon la revendication 6, où l'unité de refoulement (4) commande le compresseur (473) pour réduire la vitesse d'écoulement du réfrigérant si la température de l'air évacué du tambour de séchage (2), mesurée au milieu de l'étape de préchauffage (S230), est supérieure à la deuxième température de référence.

10. Procédé de commande selon la revendication 1, comprenant en outre
une étape de mode de veille de lavage (S110) consistant à alimenter en courant un deuxième contrôleur de lave-linge (96) commandant l'interface de lave-linge (P2) sans alimenter en courant l'unité d'entraînement de lave-linge (B2), un premier contrôleur de lave-linge (94) commandant l'unité d'entraînement de lave-linge (B2) et l'interface de lave-linge (P2) ;
une étape de mode de veille de séchage (S210) consistant à alimenter en courant un deuxième contrôleur de sèche-linge (92) commandant une interface de sèche-linge (Pl) sans alimenter en courant une unité d'entraînement de sèche-linge (B 1), un premier contrôleur de sèche-linge commandant l'unité d'entraînement de sèche-linge (B1) et l'interface de sèche-linge (P1) ;
où l'étape d'alimentation électrique du lave-linge (S120) alimente en courant l'unité d'entraînement de lave-linge (B2), le premier contrôleur de lave-linge (94) et l'interface de lave-linge (P2) ;
l'étape d'exécution de programme (S140) exécute un programme de lavage en commandant l'unité d'entraînement de lave-linge (B2) si le programme de lavage a été entré via l'interface de lave-linge (P2) ;
une étape de communication (S149) consistant à transmettre un signal de demande de préchauffage du deuxième contrôleur de lave-linge (96) au deuxième contrôleur de sèche-linge (92) si le signal de demande de préchauffage a été entré via l'interface de lave-linge (P2) ;
où l'étape d'alimentation électrique du sèche-linge (S220) alimente en courant l'unité d'entraînement de sèche-linge (B1) si le deuxième contrôleur de sèche-linge (92) reçoit le signal de demande de préchauffage ; et
où l'étape de préchauffage (S230) comprend un cycle de refoulement (S141) pour refouler de l'air vers un tambour de séchage (2) en commandant l'unité d'entraînement de sèche-linge (B1), et un cycle de chauffage (S231) pour chauffer l'air refoulé vers le tambour de séchage (2).

11. Procédé de commande selon la revendication 10, où l'étape d'alimentation électrique du sèche-linge (S220) est déclenchée si un temps restant jusqu'à la fin de l'exécution de programme est inférieur ou égal à un temps de référence prédéfini,
où l'étape d'exécution de programme (S140) exécute de préférence séquentiellement un cycle d'alimentation en eau (S141) d'une cuve (61), un cycle d'élimination des particules (S143) par rotation d'un tambour de lavage (64) prévu à l'intérieur de la cuve (61) pour le stockage de linge, un cycle de vidange (S145) d'évacuation de l'eau de la cuve (61), et un cycle de déshydratation (S146) consistant à éliminer l'eau du linge par rotation du tambour de lavage (64), et où le temps de référence est fixé sur une durée restante ou sur une durée inférieure entre le moment de déclenchement du cycle de vidange (S145) et le moment de fin du cycle de déshydratation (S146), ou sur une durée restante ou sur une durée inférieure entre le moment de déclenchement du cycle de déshydratation (S146) et le moment de fin du cycle de déshydratation (S146).

12. Procédé de commande selon la revendication 11, comprenant en outre une étape de mesure d'une température de l'air évacué du tambour de séchage (2) au milieu de l'étape de préchauffage (S230), où l'étape de préchauffage (S230) arrête le cycle de chauffage (S231) si la température mesurée lors de l'étape de mesure est supérieure à une température de référence prédéfinie, et reprend le cycle de chauffage (S231) si la température mesurée lors de l'étape de mesure est égale ou inférieure à la température de référence,
où l'étape de préchauffage (S230) se termine de préférence si le deuxième contrôleur de lave-linge (96) informe le deuxième contrôleur de sèche-linge (92) de la fin de la phase de déshydratation (S146), et/ou
où le cycle de chauffage (S231) n'active de préférence qu'une partie d'une pluralité de dispositifs de chauffage prévus pour chauffer l'air refoulé vers le tambour de séchage (2).

13. Procédé de commande selon la revendication 12, où le cycle de chauffage (S231) est exécuté par un conduit pour refouler à nouveau l'air évacué du tambour de séchage (2) vers le tambour de séchage (2), un trajet de réfrigérant formant un trajet de circulation d'un réfrigérant, un compresseur (473) faisant circuler le réfrigérant le long du trajet de réfrigérant, une unité d'absorption de chaleur (471) pour le transfert au réfrigérant de la chaleur contenue dans l'air entrant dans le conduit en provenance du tambour de séchage (2), et une unité d'émission de chaleur (472) pour le transfert de la chaleur du réfrigérant à l'air traversant l'unité d'absorption de chaleur (471), et où le premier contrôleur de sèche-linge commande le compresseur (473) pour augmenter la vitesse d'écoulement du réfrigérant si la température de l'air évacué du tambour de séchage (2), mesurée au milieu de l'étape de préchauffage (S230), est inférieure à une première température de référence prédéfinie,
où le premier contrôleur de sèche-linge commande de préférence le compresseur (473) pour maintenir la vitesse d'écoulement du réfrigérant si la température de l'air évacué du tambour de séchage (2), mesurée au milieu de l'étape de préchauffage (S230), est supérieure à la première température de référence et inférieure à une deuxième température de référence fixée de manière à être supérieure à la première température de référence, et/ou
où le premier contrôleur de sèche-linge commande de préférence le compresseur (473) pour réduire la vitesse d'écoulement du réfrigérant si la température de l'air évacué du tambour de séchage (2), mesurée au milieu de l'étape de préchauffage (S230), est supérieure à la deuxième température de référence.

14. Procédé de commande selon la revendication 1, comprenant en outre :
une étape de mode de veille de sèche-linge (S210) consistant à alimenter en courant un deuxième contrôleur de sèche-linge (92) commandant une interface de sèche-linge (P1) et l'interface de lave-linge (P2) sans alimenter en courant une unité d'entraînement de lave-linge (B2), l'interface de lave-linge (P2), une unité d'entraînement de sèche-linge (B1), l'interface de sèche-linge (P1), et où un premier contrôleur de lave-linge (94) commande l'unité d'entraînement de lave-linge (B2) et l'unité d'entraînement de sèche-linge (B1) ;
où l'étape d'exécution de programme (S140) exécute un programme de lavage en commandant l'unité d'entraînement de lave-linge (B2) si le programme de lavage a été entré via l'interface de lave-linge (P2) ;
où l'étape d'alimentation électrique du sèche-linge (S220) alimente en courant l'unité d'entraînement de sèche-linge (B1) si un signal de demande de préchauffage a été entré via l'interface de lave-linge (P2) ; et
où l'étape de préchauffage (S230) comprend un cycle de refoulement (S141) pour refouler de l'air vers un tambour de séchage (2) par l'unité d'entraînement de sèche-linge (B1) et un cycle de chauffage (S231) pour chauffer l'air refoulé vers le tambour de séchage (2).

15. Procédé de commande selon la revendication 14, où l'étape d'alimentation électrique du sèche-linge (S220) est déclenchée si un temps restant jusqu'à la fin de l'exécution de programme est inférieur ou égal à un temps de référence prédéfini.
